# EUROPÄISCHE PATENTSCHRIFT

(11) **EP 2 821 815 B1**
(45) Veröffentlichungstag und Bekanntmachung des Hinweises auf die Patenterteilung: **03.06.2015**
(21) Anmeldenummer: 13174501.0
(22) Anmeldetag: 01.07.2013
(51) Int. Cl.: G01V 3/08, G01V 3/15

(54) **Elektronikeinheit für ein tragbares Suchgerät**
Electronic unit for a portable search device
Unité électronique pour un appareil de recherche portable

(43) Veröffentlichungstag der Anmeldung: 07.01.2015
(73) Patentinhaber: Vallon GmbH, 72800 Eningen (DE)
(72) Erfinder: Vallon, Gerhard, 72800 Eningen (DE); Brucksch, Joachim, 72127 Kusterdingen (DE)
(74) Vertreter: Klocke, Peter

(56) Entgegenhaltungen:
- US-A- 6 119 526
- US-A1- 2011 109 437
- US-A1- 2011 191 058

## Beschreibung

Die Erfindung betrifft eine Elektronikeinheit für ein tragbares Suchgerät zur Detektion von Magnetfeld beeinflussenden Objekten, die die Messwerte einer Magnetfeldsonde verarbeitet und zumindest über einen Bildschirm mit Anzeigemitteln visualisiert, und die an einer Halterung eines Tragrohres oder einer Kabeltrommel des Suchgerätes lösbar befestigbar ist und elektrische Anschlüsse aufweist, an die elektrische Leitungen, die zu der Magnetfeldsonde und einem abgesetzten Batteriefach führen, anschließbar sind, wobei der Bildschirm gelenkig mit einem Modulgehäuse der Elektronikeinheit verbunden ist, und von einer Nichtgebrauchsstellung, in der eine Anzeigeseite des Bildschirms an dem Modulgehäuse flach anliegt, in eine Gebrauchsstellung, in der die Anzeigeseite des Bildschirms sichtbar ist und sich rückwärts geneigt weg von dem Modulgehäuse erstreckt, und umgekehrt, verschwenkbar ist.

Magnetfeldmessgeräte und auch Eisendetektoren sind in vielfältigen Ausführungsformen aus dem gegenwärtigen Stand der Technik bekannt. Bekannte Eisendetektoren umfassen in der Regel eine stabförmige Magnetfeldsonde, die beispielsweise an einem vorderen Ende eines Tragrohres schwenkbar befestigt oder an einem vorderen Ende eines Halte- und Übertragungskabels angeordnet ist, und eine Elektronikeinheit, die meist am Tragrohr bzw. der Kabeltrommel fest Messwerte verarbeitet und dem Benutzer des Eisendetektors zumindest optisch oder akustisch anzeigt. Dazu ist im Innern eines üblicherweise staub- und wasserdicht ausgebildeten Modulgehäuses der Elektronikeinheit mindestens eine Schaltungsleiterplatte mit einem Mikroprozessor angeordnet, der das Messsignal der Magnetfeldsonde empfängt und als Ton- und/oder Bildsignal über einen integrierten Lautsprecher bzw. einen anschließbaren Kopfhörer und über eine vorgesehene ablesbare Anzeige ausgibt. Häufig kann der Mikroprozessor die Messwerte auch in einem Speicherbaustein zumindest temporär abspeichern. Dabei kann es sich um einen eingebauten oder ansteckbaren Datenspeicher handeln, aus dem die Messwerte später zur externen Weiterverarbeitung auslesbar sind.

Bekannte Elektronikeinheiten weisen ein in ein Modulgehäuse eingebautes, gegenüber dem Modulgehäuse in der Ausrichtung nicht veränderbare Anzeigemittel, beispielsweise ein Zeigerinstrument, eine LED- bzw. LCD-Bargraphanzeige, eine LED-Kette oder ein elektronisches Display, neben den Anzeigemitteln angeordnete Bedien- und/oder Einstellelemente, elektrische Anschlüsse für die Magnetfeldsonde sowie einen elektrischen Steckverbinder zum Verbinden mit einem abgesetzten Batteriefach auf, in dem Batterien zum Betrieb der Elektronikeinheit angeordnet sind. Zum diesem Stand der Technik wird beispielhaft auf die Druckschrift DE 297 00 808 U1 verwiesen. Außerdem wird zu Stand der Technik noch auf die Druckschriften US 2011/191058 A1, US 6 119 526 A und US 2011/109437 A1 hingewiesen.

Die US 2011/191058 A1 offenbart eine Lokalisierungs- und/oder Markierungsapparatur, beispielsweise zum Orten von Sendern oder Empfängern, die eine Markierungsvorrichtung oder eine kombinierte Lokalisierungs- und Markierungsvorrichtung aufweist, die kommunikativ mit einem mobilen Gerät, wie einem Smartphone, einem Personal Digital Assistant (PDA) oder einem anderen Computergerät verbindbar oder mit einem solchen ausgerüstet ist. Das mobile Gerät ist derart konfiguriert, dass es die Verarbeitung, elektronische Speicherung sowie elektronische Anzeige von Signalen und/oder Daten ermöglicht und dem Benutzer eine Benutzerschnittstelle, Kommunikationseinrichtungen und/oder andere Funktionalitäten für die Apparatur zur Verfügung stellt. Dabei kann das mobile Gerät zudem die gesamte Sensor-Funktionalität und Verarbeitungs-Funktionalität für die Lokalisierungs- bzw. Markierungsvorrichtung aufweisen.

Die US 6 119 526 A lehrt einen fahrbaren Eisendetektor mit einem integriertem Entfernungsmesser zum Auffinden von Fehlstellen der Armierung einer Betonplatte. Der Detektor weist eine an einem Fahrgestell angeordnete Detektionssonde sowie eine an einem Führungsholm befestigte elektronische Steuerung mit einer Auswerte- und Anzeigeeinheit auf. Dabei ist die Steuerung in einem fest mit dem Holm verbundenen Gehäuse angeordnet und stellt sowohl die Sonden-Funktionalität wie auch die Verarbeitungs-Funktionalität von Sondensignalen über einen Mikroprozessor bereit, wobei die Steuerung mit einem Computer, beispielsweise einem Laptop zur Visualisierung von vom Mikroprozessor zur Verfügung gestellten Daten elektrisch koppelbar ist. Der Computer ist an dem Steuerungsgehäuse lösbar anbringbar.

Die US 2011/109437 A1 offenbart ein Lokalisierungs- und Markierungssystem für unterirdisch verlegte öffentliche Versorgungsleitungen und optional zu deren Inspektion. Das System weist ein tragbares Suchgerät, das elektromagnetische Emissionen der vergrabenen Leitungen detektiert, und ein mit einem PersonalComputer ausgerüstetes Kommunikationsgerät auf, das Informationen von dem Suchgerät zu lokalisierten Leitungen empfängt. Das Kommunikationsgerät ist ausgelegt für die Speicherung und die Übertragung der Position von vergrabenen Leitungen und weist insbesondere einen Mikroprozessor, Anzeigemittel und Eingabemittel auf. Als mobiles Kommunikationsgerät wird beispielweise ein Smart-Phone oder dergleichen verwendet, das verbunden mit dem Suchgerät für den Anwender eine Benutzerschnittstelle, eine Kommunikationsschnittstelle und ein Steuersystem für das Suchgerät bereitstellt.

Ausgehend von dem vorstehend beschriebenen Stand der Technik liegt der Erfindung die Aufgabe zugrunde, eine gattungsgemäße Elektronikeinheit vorzuschlagen, die an dem Tragrohr oder der Kabeltrommel eines tragbaren Suchgerätes einfach abnehmbar befestigbar sowie schnell und sicher elektrisch mit dem Batteriefach und der Magnetfeldsonde verbindbar ist. Weitere Aufgabe der Erfindung ist es, tragbare Suchgeräte zur Detektion von Magnetfeld beeinflussenden Objekten vorzuschlagen, die mit einer solchen Elektronikeinheit ausgestattet sind.

Diese Aufgabe wird erfindungsgemäß durch eine Elektronikeinheit mit den Merkmalen des Patentanspruchs 1 sowie durch Suchgeräte mit den Merkmalen der nebengeordneten Patentanspruchs 4, 5 gelöst. Weitere vorteilhafte Ausführungsformen sind den rückbezogenen Patentansprüchen zu entnehmen.

Danach ist bei der erfindungsgemäßen Elektronikeinheit der Bildschirm, der die Anzeigemittel aufweist, gelenkig mit einem Modulgehäuse der Elektronikeinheit verbunden. Dieser Bildschirm ist erfindungsgemäß von einer Nichtgebrauchsstellung, in der die Anzeigeseite des Bildschirms an dem Modulgehäuse flach anliegt, so dass die Anzeigemittel bei Nichtgebrauch geschützt sind, in eine Gebrauchsstellung, in der die Anzeigeseite des Bildschirms mit den Anzeigemitteln sichtbar ist und sich rückwärts geneigt zu dem Modulgehäuse erstreckt, und umgekehrt, verschwenkbar. In der Gebrauchsstellung ist der Bildschirm beliebig in seiner Ausrichtung gegenüber dem Modulgehäuse neigbar, so dass unabhängig von der Größe des Benutzers für eine ergonomische Handhabung des Suchgerätes immer ein optimaler Blickwinkel auf die Anzeigemittel einstellbar ist. Dabei kann der Bildschirm stufenlos und/oder in definierten Stufen gegenüber dem Modulgehäuse verschwenkbar sein. Vorzugsweise ist die gelenkige Verbindung zwischen dem Bildschirm, der beispielsweise ein Zeigerinstrument, eine LED- bzw. LCD-Bargraphanzeige, eine LED-Kette oder ein elektronisches Display als Anzeigemittel aufweist, und dem Modulgehäuse derart ausgebildet, dass sich der Bildschirm bei Gebrauch des

Suchgerätes nicht von selbst unerwünscht verstellen kann. Dazu können beispielsweise geeignete Hemm-, Rast- oder Blockiermittel vorgesehen sein.

Erfindungsgemäß weist das Modulgehäuse eine Vorderseite auf, die ein Bedienfeld mit Bedienelementen und optionalen Leuchtanzeigeelementen sowie ein neben dem Bedienfeld angeordnetes Freifeld mit Raum zur Aufnahme des klappbaren Bildschirms in seiner Nichtgebrauchsstellung umfasst. Das Freifeld weist randnah zu dem Bedienfeld angeordnete Bildschirmstützelemente auf, an denen sich der Bildschirm in der Nichtgebrauchsstellung abstützen kann. In der Nichtgebrauchstellung sind die Anzeigemittel des Bildschirms beispielsweise beim Transport der Elektronikeinheit bzw. des Suchgerätes vor Beschädigung und Verschmutzung geschützt ist. Dabei erstrecken sich bei der erfindungsgemäßen Elektronikeinheit das Freifeld und das Bedienfeld direkt nebeneinander, wobei die Bedienelemente des Bedienfeldes auch bei an dem Freifeld in Anlage befindlichem Bildschirm nicht abgedeckt und so bedienbar sind. Dazu weist das Freifeld mindestens eine dem Bildschirm entsprechende Größe auf.

Zudem sind bei allen Ausführungsformen der erfindungsgemäßen Elektronikeinheit die elektrischen Anschlüsse an einer Rückseite des Modulgehäuses angeordnet und zu einem Steckverbinder zusammengefasst, der beim Einsetzen der Elektronikeinheit in die Halterung des Tragrohres automatisch mit einem in die Halterung integrierten Gegensteckverbinder koppelbar ist. Damit kann auf einfache und schnelle Weise eine sichere elektrische Verbindung zu den elektrischen Leitungen, die sich zu der Magnetfeldsonde und einem abgesetzten Batteriefach hin erstrecken, hergestellt werden. Eine Trennung der elektrischen Verbindung erfolgt ebenfalls automatisch, wenn die Elektronikeinheit von dem Halter abgenommen wird.

Bei einer Ausführungsform der Erfindung sind neben dem Freifeld auf der Vorderseite oder den Seitenflanken des Gehäuses Befestigungseinrichtungen für einen aufsetzbaren Halteadapter zur Aufnahme eines Mini-Computers, wie beispielsweise eines PDAs (Personal Digital Assistent), eines Data-Loggers, eines Smartphones oder eines kleinen Tablets (Tablet-PC) angeordnet. Diese Geräte können mit dem Mikrocomputer der Elektronikeinheit über vorhandene Schnittstellen drahtgebunden oder drahtlos kommunizieren. Sie können nicht nur die mit den Anzeigemittel der Elektronikeinheit visualisierten Messwerte vergrößert darstellen, sondern auch in der Elektronikeinheit gespeicherte Messwerte übernehmen und über eine geeignete Software speziell aufbereiten und danach optisch ansprechend und verständlich auf dem elektronischen Display des jeweiligen Gerätes darstellen.

Bei einer weiteren bevorzugten Ausführungsform der Erfindung weist das Modulgehäuse an mindestens einer Seitenflanke Fixiermittel für an der Halterung ausgebildete Haltemittel auf. Die Fixiermittel, die mit den Haltemitteln bei auf der Halterung angeordneter Elektronikeinheit zusammenwirken, sorgen dafür, dass die Elektronikeinheit zusätzlich zu der Befestigung über den elektrischen Steckverbinder nochmals mechanisch sicher lösbar ausgerichtet und gehalten wird. Für ein bequemes Abnehmen bzw. Aufstecken der Elektronikeinheit von/auf die Halterung können die Fixiermittel und die Haltemittel beispielsweise als Rastelemente einer Rastverbindung ausgebildet sein. Die Erfindung schließt auch sich nicht selbstständig miteinander verbindende Befestigungs- und Haltemittel ein, die beispielsweise manuell miteinander verschraubt, verspannt oder verriegelt werden.

Ein erfindungsgemäßes tragbares Suchgerät zum Detektieren von Magnetfeld beeinflussenden Objekten, mit einer an einem vorderen Ende des Tragrohres angeordneten Magnetfeldsonde und mit einer in eine an dem Tragrohr festgelegten Halterung eingesetzten Elektronikeinheit, weist eine Elektronikeinheit mit Merkmalen wie vorstehend beschrieben auf.

Ein weiteres erfindungsgemäßes tragbares Suchgerät zum Detektieren von Magnetfeld beeinflussenden Objekten, mit einer an einem vorderen Ende eines von einer Kabeltrommel abwickelbaren Halte- und Übertragungskabels angeordneten Magnetfeldsonde und mit einer in eine an der Kabeltrommel festgelegten Halterung eingesetzten Elektronikeinheit, weist ebenfalls eine Elektronikeinheit mit den vorstehend angegebenen Merkmalen auf.

Nachfolgend wird die Erfindung anhand von Ausführungsbeispielen näher erläutert. Weitere Merkmale der Erfindung ergeben sich aus der folgenden Beschreibung des Ausführungsbeispiels zusammen mit den Patentansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen
- Figur 1: eine erfindungsgemäße Elektronikeinheit mit klappbarem Bildschirm in der Gebrauchsstellung (Fig. 1a) und in der Nichtgebrauchsstellung (Fig. 1b);
- Figur 2: die Elektronikeinheit aus Figur 1 mit Blick auf die Vorderseite (Fig. 2a) und auf die Rückseite (Fig. 2b); und
- Figur 3: die Elektronikeinheit aus Figur 1 mit aufgesetztem Halteadapter für einen Tablet oder PDA (Fig. 3a) und mit in den Halteadapter eingesetztem Tablet-PC (Fig. 3b);
- Figur 4: ein erstes erfindungsgemäßes Suchgerät mit an einem Tragrohr angeordneter Elektronikeinheit; und
- Figur 5: ein zweites erfindungsgemäßes Suchgerät mit an einer Kabeltrommel angeordneter Elektronikeinheit.

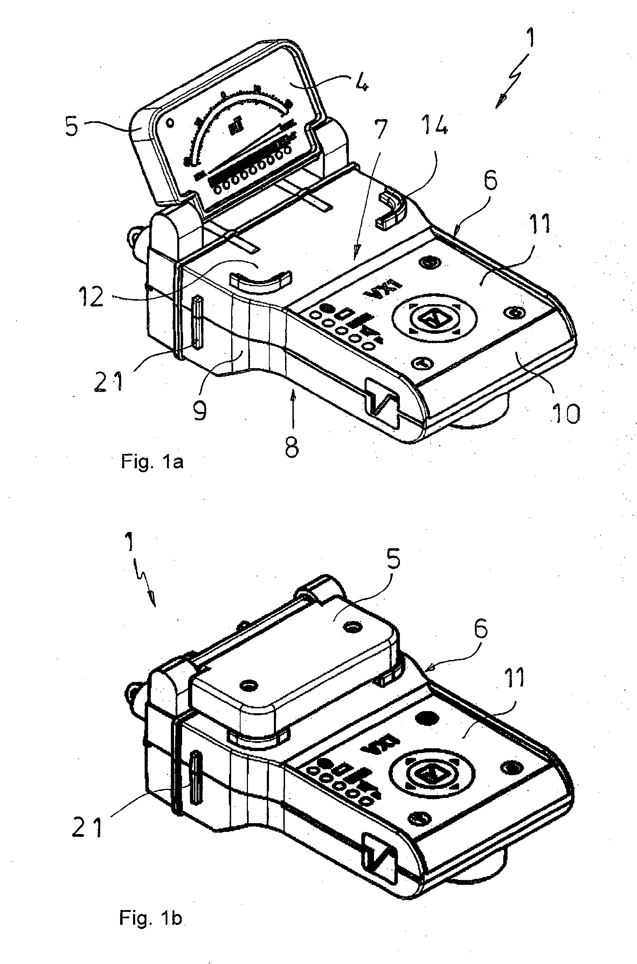

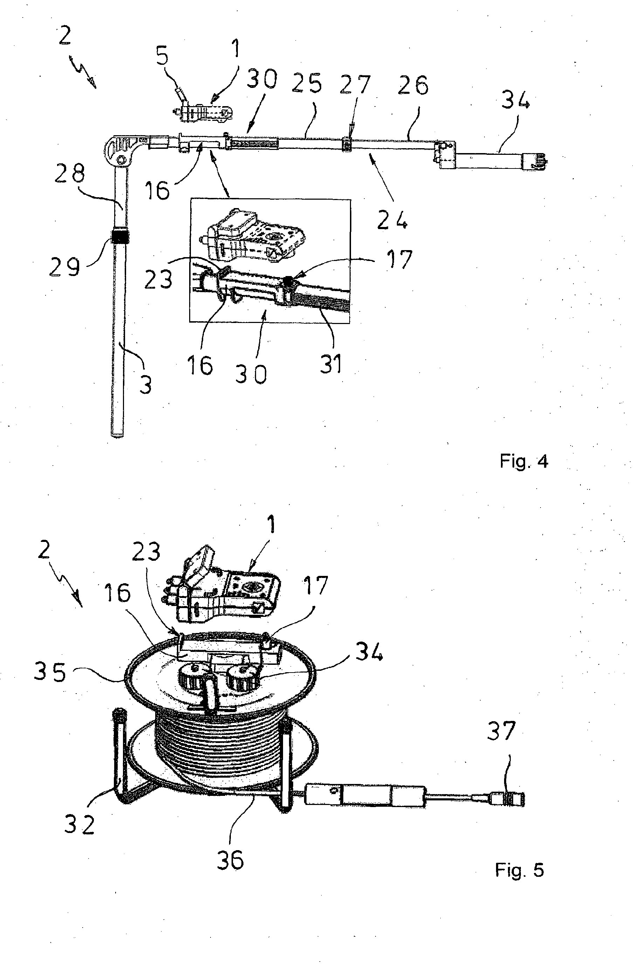

Die Figur 1 zeigt ein Ausführungsbeispiel einer erfindungsgemäßen Elektronikeinheit 1 für ein in den Figuren 4, 5 dargestelltes tragbares Suchgerät 2 zur Detektion von Magnetfeld beeinflussenden Objekten, die die Messwerte einer nur in der Figur 4 dargestellten Magnetfeldsonde 3 verarbeitet und zumindest über Anzeigemittel 4, beispielsweise ein Display 4, für den Benutzer visualisiert. Das Display 4 ist Teil eines klappbaren Bildschirms 5, der mit einem Modulgehäuse 6 der Elektronikeinheit 1 gelenkig verbunden ist. Die Elektronikeinheit 1 ist von einer in der Figur 1b dargestellten Nichtgebrauchsstellung, in der die Anzeigeseite des Bildschirms 5, d. h. das Display 4 an dem Modulgehäuse 6 flach anliegt, in eine in der Figur 1a abgebildete Gebrauchsstellung, in der die Anzeigeseite des Bildschirms 5 mit dem Display 4 sichtbar ist und sich rückwärts geneigt zum Modulgehäuse 6 erstreckt, und umgekehrt, verschwenkbar.

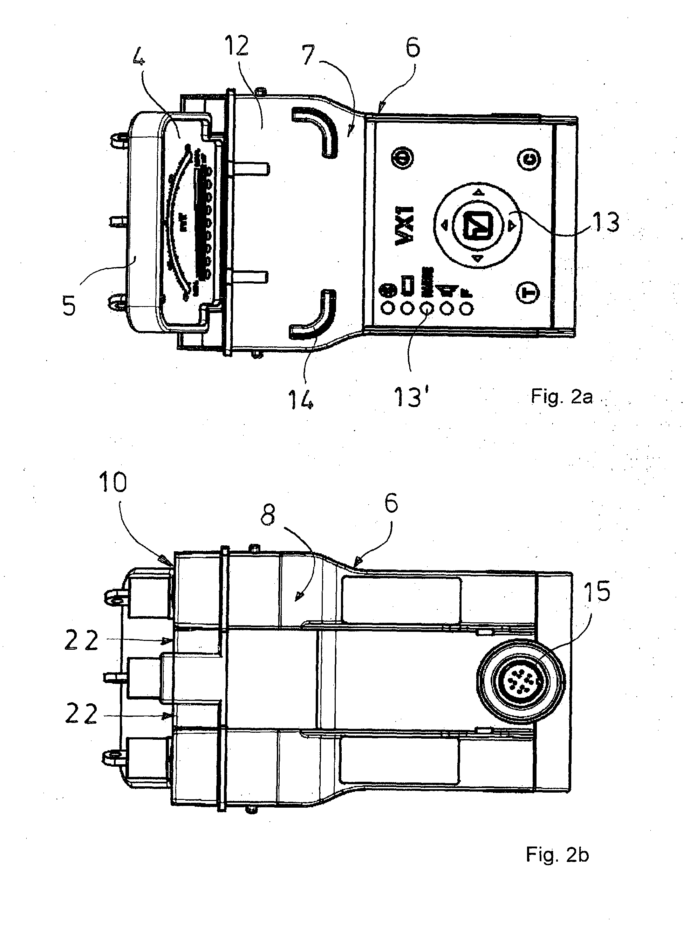

Das Modulgehäuse 6 weist eine Vorderseite 7 und eine Rückseite 8 auf, die in der Figur 2 vergrößert mit orthogonaler Blickrichtung darauf dargestellt sind. Von der Vorderseite 7 zu der Rückseite 8 erstrecken sich Längsseitenflanken 9 und Querseitenflanken 10 des Modulgehäuses 6. Wie der Figur 2a zu entnehmen ist, weist das Modulgehäuse 6 eine Vorderseite 7 mit einem Bedienfeld 11 und einem Freifeld 12 auf. An dem Bedienfeld 11 sind Bedienelemente 13 vorgesehen, die als Tasten ausgebildet sind und ein Navigieren auf- und ab- bzw. seitwärts ermöglichen. Neben den Tasten 13 sind mehrere Leuchtanzeigeelemente 13' in einer Reihe angeordnet. Das Freifeld 12, das an das Bedienfeld 11 angrenzt, bietet Raum für den klappbaren Bildschirm 5 in der Nichtgebrauchsstellung, in der sich das Display 4 nahe der Vorderseite 7 verdeckt erstreckt, ohne dass der Bildschirm 5 das Bedienfeld 11 übergreift. Das Freifeld 12 ist eben ausgebildet und trägt zwei an die Form des Bildschirms 5 angepasste Bildschirmstützelemente 14, auf denen sich der Bildschirm 5 in der Nichtgebrauchsstellung abstützt. Die Bildschirmstützelemente 14 sind randnah am Freifeld 12 nahe dem Bedienfeld 11 angeordnet. Die Bedienelemente 13 sind sowohl bei zu- wie auch bei aufgeklapptem Bildschirm 5 jederzeit bedien- und die Leuchtanzeigeelemente 13' sichtbar. Wie die Figur 2b zeigt, sind auf der Rückseite 8 des Modulgehäuses 6 elektrische Anschlüsse vorgesehen, die zu einem elektrischen Steckverbinder 15 zusammengefasst sind. Der Steckverbinder 15 koppelt beim Einsetzen der Elektronikeinheit 1 in die in den Figuren 4, 5 gezeigte Halterung 16 automatisch mit einem in die Halterung 16 integrierten Gegensteckverbinder 17.

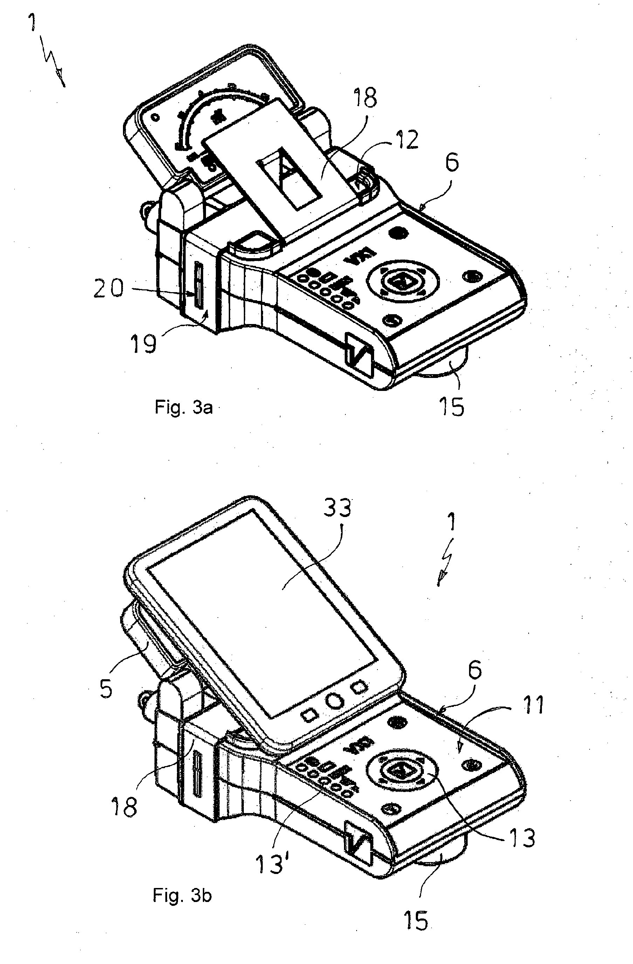

Die Figur 3a zeigt die erfindungsgemäße Elektronikeinheit 1 aus Figur 1a mit einem aufgesetzten Halteadapter 18 für die Aufnahme eines kleinen Tablet-PCs oder PDAs. Der Bildschirm 5 befindet sich in der Gebrauchsstellung, wobei der Halteadapter 18 teilweise den Bildschirm unten übergreift. Der Halteadapter 18 weist zwei federnd ausgebildete Rastfußschenkel 19 mit Rastausnehmungen 20 auf, denen nasenförmige Befestigungseinrichtungen 21 zugeordnet sind, die an den Längsseitenflanken 9 des Modulgehäuses 6 angeordnet sind. Das Modulgehäuse 6 weist außerdem an der hinteren Querseitenflanke 10 Fixiermittel 22 auf, die mit Haltemitteln 23 der in den Figuren 4, 5 gezeigten Halterung 16 zusammenwirken und die Elektronikeinheit 1 zusätzlich zu dem elektrischen Steckverbinder 15 mechanisch sicher an der Halterung 16 lösbar fixieren.

In der Figur 3b ist die Elektronikeinheit 1 mit in den aufgesetzten Halteadapter 18 eingesetzten Tablet-PC 33 dargestellt. Der Tablet-PC 33, der größer ist als der Bildschirm 5, verdeckt den Bildschirm 5 und das Freifeld 12 der Vorderseite 7 der Elektronikeinheit 1 vollständig. Der Tablet-PC 33 erstreckt sich jedoch nur bis nahe an das Bedienfeld 11 heran. Die Bedienelemente 13 und die Leuchtanzeigeelemente 13' der Elektronikeinheit 1 liegen frei. Die Datenkommunikationsschnittstelle zwischen dem Tablet-PC 33 und der Elektronikeinheit 1 ist in der Darstellung nicht sichtbar.

Die Figur 4 zeigt ein erfindungsgemäßes zur Oberflächensuche bestimmtes Suchgerät 2, an dem die vorstehend beschriebene Elektronikeinheit 1 mit klappbarem Bildschirm 5 angeordnet ist. Die Elektronikeinheit 1 ist von der Halterung 16 abgenommen dargestellt, damit die Elektronikeinheit 1 die Halterung 16 nicht verdeckt. Das Suchgerät 2 weist ein Teleskoptragrohr 24 mit einem vorderen Teleskoprohr 25 und einem hinteren Teleskoprohr 26 auf, die ineinander längsverschiebbar und mittels einer Rohrschelle 27 lösbar aneinander festlegbar sind. Vorne an dem vorderen Teleskoprohr 25 ist eine stabförmige Magnetfeldsonde 3 schwenkbar befestigt. Diese ist an einem Sondenaufnahmerohr 28 angeordnet, in das sie teilweise einschiebbar und an dem sie über eine Sondenspanneinrichtung 29 lösbar fixierbar ist. An dem vorderen Teleskoprohr 25 ist eine Führungseinheit 30 angeordnet, die einen Handgriff 31 zum Führen des Suchgerätes 2 und eine Halterung 16 für die aufsteckbare erfindungsgemäße Elektronikeinheit 1 aufweist. An der Halterung 16 sind der Gegensteckverbinder 17 für den elektrischen Steckverbinder 15 der Elektronikeinheit 1 und die Haltemittel 23 für die Fixiermittel 22 des Modulgehäuses 6 angeordnet. An dem der Magnetfeldsonde 3 fernen Ende des Teleskoptragrohrs 24 ist ein rohrförmig ausgebildetes Batteriefach 34 angeordnet. Von der Magnetfeldsonde 3 und dem Batteriefach 34 führen in den Teleskoprohren 25, 26 einliegende und damit nicht sichtbare elektrische Verbindungsleitungen zu dem Gegensteckverbinder 17.

Die Figur 5 zeigt eine andere Ausführungsform eines erfindungsgemäßen für die Bohrlochsuche vorgesehenen Suchgerätes 2, an dem die vorstehend beschriebene Elektronikeinheit 1 mit klappbarem Bildschirm 5 angeordnet ist. Die Elektronikeinheit 1 ist von der Halterung 16, an der der Gegensteckverbinder 17 und die Haltemittel 23 zum Verbinden der Elektronikeinheit 1 angeordnet sind, abgenommen dargestellt. Das Suchgerät 2 weist eine Kabeltrommel 35 auf, die die Halterung 16 für die Elektronikeinheit 1 trägt, wobei die Kabeltrommel 35 auf einem Ständer 32 angeordnet und drehbar gelagert ist. Auf der Kabeltrommel 35 ist ein von der Kabeltrommel 35 abwickelbares Halte- und Übertragungskabel 36 angeordnet, das zu dem Gegensteckverbinder 17 der Halterung 16 führt. Dessen vorderes freies Ende weist einen verriegelbaren Anschlusssteckverbinder 37 zum lösbaren Koppeln einer in der Zeichnung nicht dargestellten Magnetfeldsonde mit dem Halte- und Übertragungskabel 36 auf. An der Kabeltrommel 35 sind zwei Batteriefächer 34 angeordnet, die ebenfalls mit dem Gegensteckverbinder 17 elektrisch verbunden sind.

## Patentansprüche

1. Elektronikeinheit (1) für ein tragbares Suchgerät zur Detektion von Magnetfeld beeinflussenden Objekten, die die Messwerte einer Magnetfeldsonde verarbeitet und zumindest über einen Bildschirm (5) mit Anzeigemitteln (4) visualisiert und die an einer Halterung eines Tragrohres oder einer Kabeltrommel des Suchgerätes lösbar befestigbar ist und die elektrische Anschlüsse aufweist, an die elektrische Leitungen, die zu der Magnetfeldsonde und einem abgesetzten Batteriefach führen, anschließbar sind wobei die elektrische Anschlüsse an einer Rückseite (8) des Modulgehäuses (6) angeordnet und zu einem Steckverbinder (15) zusammengefasst sind, der beim Einsetzen der Elektronikeinheit (1) in die Halterung automatisch mit einem dort integrierten Gegensteckverbinder koppelbar ist, wobei der Bildschirm (5) gelenkig mit einem Modulgehäuse (6) der Elektronikeinheit (1) verbunden ist, und von einer Nichtgebrauchsstellung, in der eine Anzeigeseite des Bildschirms (5) an dem Modulgehäuse (6) flach anliegt, in eine Gebrauchsstellung, in der die Anzeigeseite des Bildschirms (5) sichtbar ist und sich rückwärts geneigt weg von dem Modulgehäuse (6) erstreckt, und umgekehrt, verschwenkbar ist, **dadurch gekennzeichnet, dass** das Modulgehäuse (6) eine Vorderseite (7) aufweist, die ein Bedienfeld (11) mit Bedienelementen (13) und ein Freifeld (12) zur Aufnahme des klappbaren Bildschirms (5) in der Nichtgebrauchsstellung umfasst, wobei sich das Freifeld (12) direkt neben dem Bedienfeld (11) erstreckt und mindestens eine dem Bildschirm (5) entsprechende Größe aufweist, so dass die Bedienelemente (13) des Bedienfeldes (1) auch bei an dem Freifeld (12) in Anlage befindlichem Bildschirm (5) nicht abgedeckt sind.

2. Elektronikeinheit nach Anspruch 1, **dadurch gekennzeichnet, dass** auf einer Vorderseite (7) oder an Seitenflanken (9, 10) des Modulgehäuses (6) neben dem Freifeld (12) Befestigungseinrichtungen (21) für einen aufsetzbaren Halteadapter (18) zur Aufnahme eines Mini-Computers (33) angeordnet sind.

3. Elektronikeinheit nach Anspruch 1 oder 2, **dadurch gekennzeichnet, dass** das Modulgehäuse (6) an mindestens einer Seitenflanke (9, 10) Fixiermittel (22) für an der Halterung (16) ausgebildete Haltemittel (23) aufweist.

4. Tragbares Suchgerät (2) zur Detektion von Magnetfeld beeinflussenden Objekten, mit einer vorne an einem Tragrohr (24) angeordneten Magnetfeldsonde (3) und mit einer in eine an dem Tragrohr (24) festgelegten Halterung (16) eingesetzten Elektronikeinheit (1), **dadurch gekennzeichnet, dass** das Suchgerät (2) eine Elektronikeinheit (1) gemäß einem der vorstehenden Ansprüche 1 - 3 aufweist.

5. Tragbares Suchgerät (2) zur Detektion von Magnetfeld beeinflussenden Objekten, mit einer an einem vorderen Ende eines von einer Kabeltrommel (35) abwickelbaren Halte- und Übertragungskabels (36) angeordneten Magnetfeldsonde (3) und mit einer in eine an der Kabeltrommel (35) festgelegten Halterung (16) eingesetzten Elektronikeinheit (1) **dadurch gekennzeichnet, dass** das Suchgerät (2) eine Elektronikeinheit (1) gemäß einem der vorstehenden Ansprüche 1 - 3 aufweist.

6. Tragbares Suchgerät nach Anspruch 4 oder 5, **dadurch gekennzeichnet, dass** die Halterung (16) einen Gegensteckverbinder (17) für den Steckverbinder (15) und/oder Haltemittel (23) für die Fixiermittel (22) der Elektronikeinheit (1) aufweist.

## Claims

1. An electronic unit (1) for a portable detector for detecting objects influencing magnetic fields which processes the measured values from a magnetic field sensor and displays them at least via a screen (5) with indicating means (4) and which may be releasably secured to a mounting on a support tube or a cable drum of the detector and which has electrical connections, to which electrical lines, which lead to the magnetic field sensor and a remote battery compartment, may be connected, wherein the electrical connections are arranged on a rear side of the module housing (6) and are combined into a plug connector (15), which may be automatically coupled, when the electronic unit (1) is inserted into the mounting, with a complementary plug connector integrated therewith, wherein the screen (5) is hingedly connected to a module housing (6) of the electronic unit (1) and is pivotable from a non-use position, in which an indicating surface of the screen (5) lies flatly against the module housing (6), into a use position, in which the indicating surface of the screen (5) is visible and extends rearwardly inclined away from the module housing (6), and vice versa, **characterised in that** the module housing (6) has a front surface (7), which includes a control area (11) with control elements (13) and a free area (12) for receiving the hinged screen (5) in the non-use position, wherein the open area extends directly adjacent the control area (11) and has a size which at least corresponds to the screen (5) so that the control elements (13) in the control area (11) are not covered even when the screen is in engagement with the free area (12).

2. An electronic unit as claimed in Claim 1, **characterised in that** arranged on a front surface (7) or on side flanks (9, 10) of the module housing (6) adjacent the free area (12) are fastening devices (21) for an attachable mounting adapter (18) for receiving a mini computer (33).

3. An electronic unit as claimed in Claim 1 or 2, **characterised in that** the module housing (6) includes fixing means on at least one side flank (9, 10) for retaining means (23) formed on the mounting (16).

4. A portable detector (2) for detecting objects influencing magnetic fields including a magnetic field sensor (3) arranged on the front of a support tube (24) and including an electronic unit (1) inserted into a mounting (16) fixed on the support tube (24), **characterised in that** the detector (2) includes an electronic unit (1) as claimed in one of the preceding Claims 1-3.

5. A portable detector (2) for detecting objects influencing magnetic fields including a magnetic field sensor arranged on a front end of a retaining and transmission cable (36), which may be unwound from a cable drum (35) and including an electronic unit (1) inserted into a mounting (16) fixed on the cable drum (35), **characterised in that** the detector (2) includes an electronic unit (1) as claimed one of the preceding Claims 1-3.

6. A portable detector as claimed in Claim 4 or 5, **characterised in that** the mounting (16) includes a complementary plug connector (17) for the plug connector (15) and/or retaining means (23) for the fixing means (22) of the electronic unit (1).

## Revendications

1. Unité électronique (1) pour un appareil de recherche portable permettant de détecter des objets ayant une influence sur un champ magnétique, qui traite les valeurs de mesure d'une sonde de champ magnétique et les visualise au moins au moyen d'un écran (5) avec des moyens d'affichage (4), qui peut être fixée de manière amovible à un support d'un tube-support ou d'un tambour de câble de l'appareil de recherche et qui présente des raccordements électriques auxquels des lignes électriques qui conduisent à la sonde de champ magnétique et à un compartiment à piles déporté peuvent être raccordées, les raccordements électriques étant disposés sur une face arrière (8) du boîtier de module (6) et regroupés en un connecteur (15) qui peut être couplé automatiquement à un connecteur complémentaire intégré dans l'unité électronique (1) lors de l'insertion de cette dernière dans le support, l'écran (5) étant relié de manière articulée à un boîtier de module (6) de l'unité électronique (1) et pouvant pivoter d'une position de non-utilisation, dans laquelle le côté d'affichage de l'écran (5) repose à plat sur le boîtier de module (6), dans une position d'utilisation, dans laquelle le côté d'affichage de l'écran (5) est visible et s'étend de façon inclinée vers l'arrière en s'éloignant du boîtier de module (6), et vice-versa, **caractérisée en ce que** le boîtier de module (6) présente une face avant (7) qui comprend un espace de commande (11) avec des éléments de commande (13) et un espace libre (12) pour recevoir l'écran (5) pivotant dans la position de non-utilisation, l'espace libre (12) s'étendant directement à côté de l'espace de commande (11) et présentant au moins une taille qui correspond à celle de l'écran (5), de façon que les éléments de commande (13) de l'espace de commande (11) ne soient pas recouverts même lorsque l'écran (5) est appliqué sur l'espace libre (12).

2. Unité électronique selon la revendication 1, **caractérisée en ce que** des dispositifs de fixation (21) pour un adaptateur de support (18) démontable permettant de recevoir un mini-ordinateur (33) sont disposés sur une face avant (7) ou sur des flancs latéraux (9, 10) du boîtier de module (6) à côté de l'espace libre (12).

3. Unité électronique selon la revendication 1 ou 2, **caractérisée en ce que** le boîtier de module (6) présente, sur au moins un flanc latéral (9, 10), des moyens de fixation (22) pour des moyens de retenue (23) formés sur le support (16).

4. Appareil de recherche portable (2) pour la détection d'objets ayant une influence sur un champ magnétique, comportant une sonde de champ magnétique (3) disposée à l'avant sur le tube-support (24) et une unité électronique (1) placée dans un support (16) fixé au tube-support (24), **caractérisé en ce que** l'appareil de recherche (2) présente une unité électronique (1) selon l'une des revendications précédentes 1 à 3.

5. Appareil de recherche portable (2) pour la détection d'objets ayant une influence sur un champ magnétique, comportant une sonde de champ magnétique (3) disposée à une extrémité avant d'un câble de retenue et de transmission (36) pouvant être déroulé d'un tambour de câble (35) et une unité électronique (1) placée dans un support (16) fixé au tambour de câble (35), **caractérisé en ce que** l'appareil de recherche (2) présente une unité électronique (1) selon l'une des revendications précédentes 1 à 3.

6. Appareil de recherche portable selon la revendication 4 ou 5, **caractérisé en ce que** le support (16) présente un connecteur complémentaire (17) pour le connecteur (15) et/ou des moyens de retenue (23) pour les moyens de fixation (22) de l'unité électronique (1).
